(19) **Europäisches Patentamt**

**European Patent Office**

**Office européen des brevets**

(11) **EP 1 389 627 B1**

(12) **EUROPÄISCHE PATENTSCHRIFT**

| | |
|---|---|
| (45) Veröffentlichungstag und Bekanntmachung des Hinweises auf die Patenterteilung:<br>**18.10.2006 Patentblatt 2006/42** | (51) Int Cl.:<br>**C08G 18/76** (2006.01)   **C08G 18/80** (2006.01)<br>**C08G 18/08** (2006.01)   **C08G 18/66** (2006.01)<br>**C09D 175/06** (2006.01) |

(21) Anmeldenummer: **03017948.5**

(22) Anmeldetag: **06.08.2003**

(54) **Polyurethan-Mikrogel**

Polyurethane microgel

Microgel à base de polyuréthanne

(84) Benannte Vertragsstaaten:
**AT BE BG CH CY CZ DE DK EE ES FI FR GB GR HU IE IT LI LU MC NL PT RO SE SI SK TR**

(30) Priorität: **16.08.2002 DE 10238349**

(43) Veröffentlichungstag der Anmeldung:
**18.02.2004 Patentblatt 2004/08**

(73) Patentinhaber: **PPG Industries Lacke GmbH**
**42329 Wuppertal (DE)**

(72) Erfinder: **Hille, Hans-Dieter**
**51467 Bergisch Gladbach (DE)**

(74) Vertreter: **Sternagel, Fleischer, Godemeyer & Partner**
**Polypatent,**
**Braunsberger Feld 29**
**51429 Bergisch Gladbach (DE)**

(56) Entgegenhaltungen:
**EP-A- 0 234 362          EP-A- 0 548 727**
**WO-A-00/63265**

• **PATENT ABSTRACTS OF JAPAN vol. 018, no. 568 (C-1266), 31. Oktober 1994 (1994-10-31) & JP 06 206979 A (DAINIPPON INK & CHEM INC), 26. Juli 1994 (1994-07-26)**

**Beschreibung**

Die vorliegende Erfindung betrifft Polymermikroteilchen auf Basis von Polyurethanen, ein Verfahren zu ihrer Herstellung sowie deren Verwendung zur Herstellung wasserverdünnbarer Beschichtungszusammensetzungen, insbesondere auf dem Gebiet der Automobilserienlackierung.

Eine konventionelle Autolackschicht nach dem sogenannten "Basislack/Klarlackverfahren" mit ausreichender Steinschlagfestigkeit und gutem UV-Schutz besteht im allgemeinen aus insgesamt vier voneinander unterschiedlichen Schichten (Vierschichtaufbau). Diese vier Schichten werden nacheinander in getrennten Lackieranlagen aufgetragen.
Die erste, direkt auf dem Autoblech befindliche Schicht ist eine elektrophoretisch aufgetragene Schicht (Electrocoatschicht, KTL-Schicht), die durch Elektrotauchlackierung - hauptsächlich kathodische Tauchlackierung (KTL) - zwecks Korrosionsschutz aufgebracht und anschließend eingebrannt wird.
Die zweite, auf der Electrocoatschicht befindliche und etwa 30 bis 40 $\mu$m dicke Schicht ist eine sogenannte Füllerschicht, die einerseits Schutz gegen mechanische Angriffe (Steinschlagschutzfunktion) bietet, andererseits die rauhe Oberfläche der Rohkarosserie für die nachfolgende Decklackierung glättet, kleinere Unebenheiten ausfüllt und die elektrophoretisch abgeschiedene Schicht (KTL-Schicht) vor der natürlichen UV-Strahlung schützt. Diese Schicht wird größtenteils durch Applikation eines Einbrennlackes, mit elektrostatischen Hochrotationsglocken und anschließendem Einbrennvorgang bei Temperaturen über 130 °C erzeugt.
Die dritte, auf der Füllerschicht befindliche Schicht ist die Basislackschicht, die durch entsprechende Pigmente der Karosserie die gewünschte Farbe gibt. Der Basislack wird im herkömmlichen Spritzverfahren aufgetragen. Die Schichtdicke dieser herkömmlichen Basislackschicht liegt je nach Farbton zwischen etwa 12 bis 25 $\mu$m. Meistens wird diese Schicht, besonders bei Metallic-Effektlacken, in zwei Verfahrensschritten aufgebracht. In einem ersten Schritt erfolgt die Auftragung mittels elektrostatischer Hochrotationsglocken, gefolgt von einem zweiten Auftrag mittels pneumatischer Zerstäubung. Diese Schicht wird (bei Verwendung von wäßrigem Basislack) mit Infrarotstrahlern und/oder durch Warmluftkonvektion zwischengetrocknet.
Die vierte und oberste, auf der Basislackschicht befindliche Schicht ist die Klarlackschicht, die meistens in einem Auftrag durch elektrostatische Hochrotationsglocken aufgetragen wird. Sie verleiht der Karosserie den gewünschten Glanz und schützt den Basislack vor Umwelteinflüssen (UV-Strahlung, Salzwasser, etc.).
Anschließend werden die Basislackschicht und die Klarlackschicht gemeinsam eingebrannt.

Im Hinblick auf den Umweltschutz werden immer mehr Automobilserienlacke auf Wasserbasis verwendet. Wäßrige Automobilserienlacke sind bestens eingeführt und aus der industriellen Anwendung nicht mehr wegzudenken, nicht nur aus Gründen des Umweltschutzes. Wäßrige Lacksysteme sind inzwischen nicht mehr nur das notwendige Übel, sondern stellen technologisch und vom Potential der Möglichkeiten eine ernst zu nehmende Alternative dar. Gleichwohl sind die Anforderungen in den letzten Jahren erheblich angestiegen. Die Notwendigkeit zur Steigerung der Produktivität bei gleichzeitiger weiterer Erniedrigung der Emissionswerte stellt neue Anforderungen an wäßrige Basislacksysteme. Insbesondere zu nennen ist die Verträglichkeit mit emissionsarmen Klarlacken (Pulver, Wasserklarlack, Pulverslurry) und die wegen kürzerer Verarbeitungszyklen notwendige Steigerung der Applikationssicherheit. So ist es z.B. sehr schwierig, mit einem Wasserbasislack des Standes der Technik, zusammen mit einem Pulverklarlack, die geforderten Haftungseigenschaften zu erreichen.
Insbesondere die Verträglichkeit mit Klarlacken auf Basis von Pulverslurry stellen besonders hohe Anforderungen an wäßrige Basislacke. Unter dem Begriff Pulverslurry wird eine Suspension aus Lackteilchen und Wasser verstanden, die üblicherweise aus 60 bis 70 Gew.-% Wasser und 30 bis 40 Gew.-% Festkörper besteht. Solche Zusammensetzungen sind beispielsweise aus der DE 196 13 547 C2 und DE 196 18 657 A1 bekannt. Die Verwendung einer solchen Pulverslurry zeichnet sich durch eine besonders einfache Applikation der entsprechenden Lacke aus. So kann ein solcher Lack mit einer herkömmlichen Lackieranlage für Naßlacke aufgetragen werden; d.h. daß auf den Einsatz von speziell abgetrennten Lackiervorrichtungen, wie sie für die Lackierung mit Pulverlacken notwendig sind, verzichtet werden kann. Ein unerwünschter Effekt, der bei der Verwendung herkömmlicher Basislacke auf Wasserbasis unter einer Klarlackschicht aus Pulverslurry beobachtet wird, ist das sogenannte "mud-cracking". Mit dieser Bezeichnung wird ein Oberflächenzustand der ausgehärteten Lackoberfläche beschrieben, der auf ein Reißen der Lackschichten zurückzuführen ist und mit dem Aussehen eines ausgetrockneten Wüstenbodens vergleichbar ist.

Des weiteren ist bei einem wäßrigen Metallicbasislack die sogenannte "Gasungsstabilität" besonders wichtig. Der Ausdruck "Gasungsstabilität" bezeichnet die Eigenschaft eines ungeschützte Aluminiumteilchen enthaltenden Metallic-Effektlackes, bei dem die Aluminiumteilchen nicht mit dem Lösemittel Wasser unter Bildung von Wasserstoff reagieren.
Eine Möglichkeit der Beeinflussung dieser Eigenschaft ist die Verwendung von speziellen, besonders behandelten Aluminiumbronzen (EP-0 321 470). Solche Aluminiumbronzen sind teurer, weniger brilliant und können unerwünschte Eigenschaften in das System einbringen, wie z.B. eine erhöhte Neigung zur Agglomeratbildung.

Eine andere Möglichkeit die Gasung zu verhindern ist der Zusatz entsprechender Additive (EP-0 206 615 B1 und EP-0 238 222 B1). In vielen Fällen handelt es sich um Additive, die neben ihren erwünschten Wirkungen auch negative Eigenschaften in das System einbringen können.

Aufgrund des gesteigerten Anforderungsprofils an einen in der Automobilindustrie verwendbaren wäßrigen Basislack kommt den rheologischen Eigenschaften eines solchen eine erhöhte Bedeutung zu. Unter dem Begriff "rheologische Eigenschaften" wird verstanden, daß der Lack einerseits beim Spritzvorgang, also bei hohen Schergeschwindigkeiten, eine so niedrige Viskosität hat, daß er leicht zerstäubt werden kann, und andererseits beim Auftreffen auf dem Substrat, also bei niedrigen Schergeschwindigkeiten, eine so hohe Viskosität hat, daß er genügend standfest ist und keine Läuferbildung zeigt. Auch die Ausbildung eines ausgeprägten Metallic-Effektes hängt mit diesen Eigenschaften zusammen.

Die für die Lagerung und die Anwendung handelsüblicher Wasserbasislacke notwendigen speziellen rheologischen Eigenschaften wie Viskosität und Pseudoplastizität werden häufig durch die Verwendung eines anorganischen Schichtsilikats vom Montmorrillonit-Typ eingestellt. Dessen Verwendung trägt dazu bei, dem Wasserbasislack seine guten anwendungstechnischen Eigenschaften, wie beispielsweise gute Zerstäubbarkeit, gute Standfestigkeit sowie im Falle effektgebender Wasserbasislacke einen sehr guten Metallic-Effekt, d.h. einen sehr stark ausgeprägten Flip-Flop-Effekt, zu verleihen.

Leider können die anorganischen Schichtsilikate die gewünschten rheologischen Eigenschaften nicht immer und unter allen Umständen zuverlässig vermitteln. So kommt es vor, daß die ursprünglich eingestellte Viskosität der hiermit ausgerüsteten Wasserbasislacke bei der Lagerung oder bei der Anwendung beim Kunden stark absinkt, so daß sich die Standfestigkeit verringert und insbesondere der Metallic-Effekt sich bei den betreffenden Wasserbasislackierungen nachteilig verändert.

Dieses Phänomen, das in der Praxis große Probleme bereiten kann, ist in seinen Ursachen noch nicht vollständig aufgeklärt. Es wird angenommen, daß es mit dem Mechanismus des Rheologieaufbaus - beim Montmorillonit über Dipole innerhalb seiner Molekülstruktur - zusammenhängt. Hier wirken sich ionische Materialien und Materialien mit starken elektrischen Feldern - beispielsweise dreiwertige Eisenionen, die einen besonders kleinen Ionenradius haben - ausgesprochen negativ aus. Solche Eisenionen werden beispielsweise durch Pigmente in die Wasserbasislacke eingetragen. Auch Tenside und Moleküle mit starken Dipolen können sich nachteilig bemerkbar machen.

Ein weiterer Nachteil der anorganischen Schichtsilikate ist, daß sie sich sehr oft negativ auf die Stabilität im Wasserbasislack eingesetzter Aluminiumeffektpigmente auswirken, so daß sie bei ungenügender Passivierung zu gasen beginnen. Im allgemeinen kann man dem in gewissem Umfang durch eine Chromatierung der Oberfläche der Aluminiumeffektpigmente abhelfen, allerdings ist die Chromatierung ökologisch nicht ganz unbedenklich und wird von den Endkunden zunehmend abgelehnt.

Darüber hinaus enthalten solche Schichtsilikate beträchtliche Mengen an Alkali- oder Erdalkaliionen. Diese Ionen führen oft wegen ihrer wasseranziehenden Wirkung zu einer schlechten Schwitzwasserbeständigkeit im Gesamtaufbau einer Automobilbeschichtung.

Daher ist es ein Bestreben der Lackhersteller, solche Schichtsilikate nach Möglichkeit zu vermeiden und als Bindemittel solche Polymere zu verwenden, die die gewünschten Eigenschaften von sich aus mitbringen, sogenannte "maßgeschneiderte" Polymere.

Einer der wichtigsten Vertreter dieser Spezies sind wäßrige Dispersionen von vernetzten Polymermikroteilchen.

Den Grad der Vernetzung der Polymerteilchen erkennt man am Gehalt der unlöslichen Anteile. Die unlöslichen Anteile werden mittels der sogenannten "THF-Methode" bestimmt. Hierzu werden in ein Zentrifugenröhrchen ca. 1 g der Mikrogeldispersion eingewogen, mit 10 ml Tetrahydrofuran versetzt und ca. 1 Minute lang in einem Ultraschallbad homogenisiert. Dann wird mittels einer Zentrifuge mit Festwinkel-Rotor 15 Minuten lang bei 13.500 U/min zentrifugiert. Anschließend wird der Überstand vorsichtig abdekantiert und das Röhrchen in einem Laborofen 6 h lang bei 105 °C getrocknet. Nach Abkühlen des Röhrchens wird der Rückstand zurückgewogen. Die unlöslichen Anteile werden gemäß folgender Formel berechnet:

$$\% \text{ Unlösliche Anteile} = \text{Rückstand} * 10000 / \text{Einwaage} * \% \text{ Festkörpergehalt der Mikrogeldispersion}$$

Unter dem Begriff "vollständig vernetzt" werden solche Polymere verstanden, die einen unvernetzten Anteil - bezogen auf das aus den eingesetzten Monomeren stammende Polymer - von nicht mehr als 5 Gew-% aufweisen.

Aus der EP 0 234 362 A1 sind Mikrogele bekannt, die aus mindestens einem Polyisocyanat und einem Polyesterpolyol mit teilweise blockierten Isocyanatgruppen und mit mindestens zwei Hydroxylgruppen hergestellt werden. In den Beispielen ist ausschließlich die Blockierung mit Malonsäurediethylester beschrieben, wobei eine Vernetzung bereits bei einer Temperatur von weniger als 100 °C stattfindet.

Aus dem Artikel Z.W. Wicks und B.W. Kosty, "Reactions of Diethyl Malonate Blocked Cyclohexyl Isocyanate", J. of Coatings Technology, 1977, S. 77 - 84 ist aber bekannt, dass bei der Umsetzung von einem Isocyanat mit Malonsäurediethylester tatsächlich keine Blockierungsreaktion stattfindet, da Urethanbindungen nur untergeordnet und infolge einer Nebenreaktion entstehen. Hauptsächlich entstehen Amide, die infolge einer anschließenden Umesterung vernetzen. Aufgrund dieser Amidbindungen wird unter den Bedingungen, bei denen üblicherweise eine Deblockierung stattfindet (d.h. bei der das Blockierungsmittel abgespalten wird) im Falle von Malonsäurediethylester als "Blockierungsmittel" nicht Malonsäurediethylester, sondern Ethanol, abgespalten.

Diese erheblichen chemischen Unterschiede in dem Backbone des Polymers sind wohl auch der Grund, warum wasserverdünnbare Metallicbasislacke unter Verwendung der in der EP 0 234 362 A1 offenbarten Mikrogele in Mehrschichtlackierungen für die Automobilindustrie gegenüber Mikrogelen aus der WO 00/63265 eine völlig unzureichende Orientierung der Effektpigmente und eine mangelhafte Haftung unter einem Pulverklarlack zeigen.

Aus der WO 00/63265 ist die Verwendung eines Mikrogels in wasserverdünnbaren Basislacken bekannt, das erhältlich ist aus aus einem Präpolymer, welches anschließend mit einem Vernetzer zu einem vollständig vernetzten Polymermikroteilchen umgesetzt wird.

Der Nachteil der unter Verwendung dieser Mikrogele hergestellten Mehrschichtlackierungen in der Automobilindustrie ist, dass insbesondere bei Basislacken mit ausgeprägten Metalliceffekt die Bildung von sogenannten "Wolken", d.h. von Hell-Dunkel-Schattierungen, zu beobachten ist. Wolkige Lackierungen werden aber gerade bei besonders hochwertigen Lackierungen mit großer Oberfläche, wie beispielsweise Automobile, nicht akzeptiert.

Aufgabe der vorliegenden Erfindung ist die Bereitstellung von in wässriger Phase dispergierten Polymermikroteilchen, die bei Verwendung in farbgebenden Beschichtungsmittelzubereitungen, insbesondere in Basislacken für die Automobilindustrie, diesen verbesserte Applikations- und dekorative Eigenschaften verleihen und bei Verwendung in Metallicbasislacken nicht zur Wolkenbildung neigen. Dabei müssen die von der Automobilindustrie geforderten Haftungseigenschaften einer unter Verwendung dieser Polymermikroteilchen hergestellten Mehrschichtlackierung, insbesondere bei Verwendung von Klarlacken auf Basis von Pulver, erzielt werden.

Diese Aufgabe wird erfindungsgemäß gelöst durch in wässriger Phase dispergierte Polymermikroteilchen, erhältlich durch

(a) Dispergieren in wässriger Phase einer zur Bildung eines Polyurethans fähigen Vorstufe aus mindestens einer Komponente, wobei die Vorstufe

- mit Methylethylketoxim blockierte Isocyanatgruppen auf Basis von 1,3-Bis(1-isocyanato-1-methylethyl)benzol (TMXDI);
- ein gewichtsmittleres Molekulargewicht von 2.000 bis 150.000;
- eine Säurezahl zwischen 10 und 50;
- einer OH-Zahl zwischen 25 und 250; und
- im statistischen Mittel ein Verhältnis von blockierten Isocyanatgruppen zu Hydroxylgruppen von weniger als I

aufweist;

(b) Vernetzen der aus Schritt (a) erhältlichen Vorstufe in wässriger Phase in Gegenwart eines Katalysators, wobei die aus der Vorstufe stammenden Hydroxylgruppen mit den mit Methylethylketoxim blockierten Isocyanatgruppen in wässriger Phase unter Abspaltung von Methylethylketoxim reagieren.

Es ist überraschend, dass bei einer Temperatur von weniger als 100 °C bereits eine Vernetzung und die Freisetzung von Methylethylketoxim zu beobachten ist.

Überraschend deshalb, weil aus einem Artikel von V. Mirgel und K. Nachtkamp, "Chemische Aspekte vernetzender Einbrennurethanlacke", Farbe & Lack, 89. Jahrgang, 12/1983, S. 928-934 bekannt ist, dass zwar mit Malonsäurediethylester "blockierte" Polyisocyanante bereits bei 100 °C vernetzen, aber mit Methylethylketoxim blockierte Systeme auf Basis von Hexamethylendiisocyanat (HDI) erst ab einer Temperatur von 140 °C vernetzen. Vor diesem Hintergrund wäre nämlich eine Vernetzung von mit Methylethylketoxim blockiertem TMXDI ausgeschlossen.

Aber nicht nur in chemischer Hinsicht unterscheiden sich die erfindungsgemäßen Mikrogele von denen des Standes der Technik. Denn die größten Unterschiede dieser Mikrogele gegenüber solchen des Standes der Technik liegen darin, dass sie einer farbgebenden Beschichtungszusammensetzung und einer daraus resultierenden Mehrschichtlackierung deutlich verbesserte rheologische und dekorative Eigenschaften verleihen.

Auch ist bei der Verwendung dieser erfindungsgemäßen Mikrogeldispersion in wasserverdünnbaren Metallicbasislacken, d.h. in Lacken mit Effektpigmenten, keine Bildung von Wolken zu beobachten.

Aber auch die übrigen Eigenschaften des farbgebenden Basislacks, insbesondere die Gasungsstabilität, die Haftung unter einer Klarlackschicht aus einem Pulverklarlack oder einem Pulverslurryklarlack, die Schwitzwasserbeständigkeit, Resistenz gegen Wiederanlösen durch unterschiedliche Klarlacke, gute Schleifriefenabdeckung und die Steinschlagbeständigkeit sind so ausgezeichnet, dass sie dem hohen Anforderungsprofil der Automobilindustrie genügen.

Die rheologischen Eigenschaften der unter Verwendung dieser Mikrogele hergestellten Beschichtungszusammensetzungen sind gegenüber denen des Standes der Technik deutlich verbessert. So kann mit einem Lack, der das erfindungsgemäße Mikrogel beispielsweise in einer Menge von 20 Gew.-% (bezogen auf den Festkörperanteil) enthält, eine Standsicherheit von 20 $\mu$m bei einer Viskosität von 100 mPa.s, gemessen bei einer Schergeschwindigkeit von 1.000 s$^{-1}$, erzielt werden.

Unter dem Begriff "Standsicherheit" wird die Eigenschaft eines Lackes verstanden, daß die notwendige Schichtstärke ohne Läuferbildung erreicht werden kann.

Des weiteren verleihen die erfindungsgemäßen, in Dispersion vorliegenden Mikrogele kompatiblen Beschichtungszusammensetzungen hervorragende dekorative Eigenschaften, die sich beispielsweise anhand eines ausgeprägten Metallikeffekts, einer sehr guten Resistenz gegen Wiederanlösen durch verschiedene Klarlacke, Wolkenfreiheit und Unempfindlichkeit gegen Schleifriefen zeigen.

Gemäß einer bevorzugten Ausführungsform der vorliegenden Erfindung besteht die Vorstufe aus mindestens zwei Komponenten, wobei

- die erste Komponente (I) ein mit Methylethylketoxim blockiertes Di- oder Polyisocyanat auf Basis von 1,3-Bis(1-isocyanato-1-methylethyl)benzol (TMXDI) mit einem Molekulargewicht zwischen 418 und 5.000, einer Säurezahl zwischen 0 und 100 mg KOH/g und einer Funktionalität von mindestens 2 blockierten NCO-Gruppen im statistischen Mittel pro Molekül ist;
- die zweite Komponente (II) ein Polyol mit einer OH-Zahl zwischen 25 und 500 mg KOH/g, einer Säurezahl zwischen 0 und 100 und einem gewichtsmittleren Molekulargewicht zwischen 500 und 5.000 ist; und
- die Vorstufe eine Säurezahl zwischen 10 und 50 mg KOH/g aufweist.

Die Komponente (II) kann dabei vorteilhafterweise ein carboxylgruppenhaltiges Polyol sein, insbesondere ein Polyesterpolyol mit einem zahlenmittleren Molekulargewicht zwischen 700 und 5.000, besonders bevorzugt zwischen 750 und 2.000; einer Säurezahl zwischen 25 und 100 mg KOH/g, besonders bevorzugt zwischen 40 und 80 mg KOH/g; und einer OH-Zahl zwischen 34 und 300 mg KOH/g.

Die Einstellung der optimalen Eigenschaften des Polyesters anhand des Molekulargewichtes, der Säurezahl und der OH-Zahl, sind für den Fachmann durch einfache Versuche leicht zu ermitteln. Insbesondere die Tatsache, ein Gelieren während dessen Herstellung zu vermeiden, bewirkt eine Limitierung der funktionellen Gruppen im Verhältnis zum Molekulargewicht des Polyesters.

Im Hinblick auf eine industrielle Herstellung des erfindungsgemäßen Polymers hat es sich als günstig herausgestellt, wenn der Neutralisationsgrad des Polyesterpolyols während des gesamten Herstellungsvorgangs zwischen 30 und 100 %, insbesondere zwischen 50 und 80 %, liegt. Dies ermöglicht eine besonders hohe Konstanz der gewünschten Eigenschaften der hergestellten Polymere.

Auch die Auswahl des optimalen Neutralisationsgrades ist dem Fachmann bekannt und kann durch wenige Laborversuche ermittelt werden.

In einer weiteren, ebenfalls bevorzugten Ausführungsform der vorliegenden Erfindung ist das Polyesterpolyol durch mindestens eine Monocarbonsäure modifiziert, ausgewählt aus der Gruppe der gesättigten oder ungesättigten, isolierten oder konjugierten, linearen oder verzweigten Fettsäuren sowie der Benzoesäure oder Crotonsäure.

Die Fettsäure kann vorteilhafterweise 5 bis 22 Kohlenstoffatome aufweisen und ist insbesondere aus der Gruppe von Linolsäure, Ölsäure, Sojafettsäure, Isononansäure oder Isostearinsäure ausgewählt.

In wässriger Phase dispergierte Polymermikroteilchen nach einem der vorhergehenden Ansprüche, dadurch gekennzeichnet, dass die Polydispersität der Vorstufe mindestens 3 beträgt.

Die Polydispersität eines Polymers wird anhand von Gelpermeationschromatographie (GPC) bestimmt und stellt den Quotienten aus dem gewichtsmittleren und dem zahlenmittleren Molekulargewicht dar. Auf diese Weise wird gewährleistet, dass die gebildeten Polymermikroteilchen eine homogenere Größenverteilung aufweisen.

In wässriger Phase dispergierte Polymermikroteilchen nach einem der vorhergehenden Ansprüche, dadurch gekennzeichnet, dass der Katalysator Dibutyzinndilaurat (DBTL) ist.

Dibutyzinndilaurat bewirkt eine außerordentlich wirksame Vernetzung der zu bildenden Polymermikroteilchen.

Natürlich ist es auch möglich, eine Vernetzung unter Druck bei einer Temperatur von mehr als 100°C durchzuführen.

Die vorliegende Erfindung betrifft auch ein Verfahren zur Herstellung von in wässriger Phase dispergierten Polymermikroteilchen, bei dem

a) 1,3-Bis(1-isocyanato-1-methylethyl)benzol (TMXDI) mit Methylethylketoxim in der Weise umgesetzt wird, dass das Umsetzungsprodukt einen NCO-Gehalt von mindestens 13 % aufweist;

b) danach diese Reaktionsmischung mit einem Polyol mit mindestens drei OH-Gruppen und einer Verbindung, die mindestens eine zur Anionenbildung befähigte Gruppe und mindestens eine OH-Gruppe aufweist, so lange umgesetzt wird, bis der NCO-Gehalt der Reaktionsmischung weniger als 0,1 % beträgt;

c) anschließend der Reaktionsmischung Wasser und soviel Neutralisationsmittel zugegeben wird, so dass eine stabile Dispersion erhalten wird;

d) die Reaktionsmischung solange bei einer Temperatur zwischen 30 und 100 °C gerührt wird, bis der Anteil an vernetzten Teilchen mehr als 60 % beträgt, bezogen auf den Gehalt an allen nichtflüchtigen Bestandteilen der Reaktionsmischung.

Dies ist eine besonders gut geeignete Herstellungsweise für die zuvor beschriebenen, in wässriger Phase dispergierten erfindungsgemäßen Polymermikroteilchen.

Der Gehalt an unverkapptem Isocyanat im Reaktionsschritt a) darf aber nicht so hoch gewählt werden, dass ein Gelieren der Reaktionsmischung erfolgt.

Die erfindungsgemäßen, in Dispersion vorliegenden Mikrogele können insbesondere für wäßrige oder lösemittelhaltige Beschichtungszusammensetzungen verwendet werden.

Eine bevorzugte Verwendungsform der Erfindung ist die Verwendung der in Dispersion vorliegenden Mikrogele in wäßrigen oder lösemittelhaltigen Basislacken, Effektbasislacken oder Klarlacken in der Automobilindustrie. Die Aufarbeitung der erfindungsgemäße Mikrogeldispersion für deren Verwendung in lösemittelhaltigen Lacken erfolgt nach Verfahren des Standes der Technik, die dem Fachmann geläufig sind.

So können die erfindungsgemäßen Polymere ebenso gut für die Herstellung von wäßrigen Klarlacken, Einbrennlacken für industrielle Anwendungen sowie Anstrichfarben für den Bautensektor verwendet werden.

Die folgenden Beispiele dienen der Erläuterung der Erfindung, ohne diese darauf zu beschränken:

**Beispiel 1.1:** Herstellung eines erfindungsgemäßen Polyurethan-Mikrogels:

### Herstellung eines Polyesterdiols (A):

In einem Glaskolben mit einem Volumen von 4 l, ausgestattet mit Rührer, Wasserabscheider und Rückflusskühler sowie einer Temperaturregelung wurden die folgenden Ausgangsprodukte eingewogen: 1604,7 g Polytetrahydrofuran ($M_n$ = 650 g/mol), 954,6 g einer dimeren Fettsäure (Pripol 1013) und 1,5 g Dibutylzinndioxid. Die Reaktionsmischung wurde unter Rühren innerhalb von vier Stunden auf eine Reaktionstemperatur von 220 °C erhitzt und bis zu einer Säurezahl von 1 $mg_{kOH}/g_{FH}$ kondensiert. Anschließend ist das Reaktionsprodukt bei einer Temperatur von 180°C eine Stunde unter Vakuum gehalten worden.

### Herstellung einer Polyurethandispersion (B):

In einem Glaskolben mit einem Volumen von 6 l, ausgestattet mit Rührer, Rückflusskühler sowie einer Temperaturregelung werden 695,3 g Tetramethylenxylendiisocyanat und 1,5 g Dibutylzinndilaurat vorgelegt und unter Rühren 145,8 g Methylethylketoxim so zudosiert, dass die Temperatur maximal 90°C erreicht. Die Reaktion wird bei einer Temperatur von 80°C weitergeführt bis ein Isocyanatgehalt von 20,1% erreicht ist. Anschließend werden zu der Reaktionsmischung 502,7 g des Polyesterdiols (A), 89,8 g Dimethylolpropionsäure, 251,7 g Di-Trimethylolpropan und 377, l g Methylethylketon zugegeben und die Reaktion bei 80°C bis zu einem Isocyanatgehalt kleiner 0,02% fortgeführt. Durch Zudosierung von 50,7 g Dimethylethanolamin und 3932 g deionisiertes Wasser wird diese Harzlösung dispergiert. Nach Entfernung des Methylethylketons unter Vakuum wird eine stabile, feinteilige Dispersion mit einem Feststoffgehalt von 30% erhalten.

### Herstellung des erfindungsgemäßen PU-Mikrogels (C):

Die Polyurethan-Dispersion (B) wird in einem Kolben mit Wasserabscheider vorgelegt, mit 8,9 g Dimethylethanolamin versetzt und unter Rühren auf 96°C aufgeheizt. Anschließend werden 10 g (0,5% auf Feststoff) Dibutylzinndilaurat zugeben. Zusätzlich wird durch die Dispersion Stickstoff mit einem Volumenstrom von ca. l Liter pro Minute geleitet. Nach zehnstündiger Reaktion wird eine Dispersion mit einem unlöslichen Polymeranteil bezogen auf den Feststoff von 60% erhalten.

### Herstellung einer Polyurethandispersion (D) - für die Lackherstellung

In einem 6 lReaktionsgefäß mit Rückflußkühler werden 602,3 g eines Polyesters mit einem zahlenmittleren Molekulargewicht von 1440 auf Basis einer dimerisierten Fettsäure (Pripol 1013 der Firma Unichema) und 1,6 Hexandiol mit einer Säurezahl unter 3, 56 g Dimethylolpropionsäure, 306,2 g Tetramethylxylylendiisocyanat, 241 g Methylethylketon und 0,9 g Dibutylzinndilaurat eingewogen. Diese Mischung wird so lange bei 80°C gehalten, bis der Isocyanatgehalt 2,35 % beträgt. Anschließend werden 90,4 g Trimethylolpropan und 23 g Methylehtylketon zugegeben und bei 80°C auf einen Isocyanatgehalt von < 0,03 % gefahren. Danach werden eine Mischung aus 33,5 g Dimethylethanolamin und 1085 g vollentsalztem Wasser und anschließend 1598 g vollentsaltes Wasser zugegeben. Nach einer Vakuumdestillation, bei der das Methylethylketon entfernt wird, erhält man eine Dispersion mit einem Festkörpergehalt von 28 % (60 Minuten bei 120 °C)

**Beispiel 1.2:** Herstellung einer erfindungsgemäßen Basislackformulierung:

Für die Basislackformulierung sind 500 g des Polyurethan-Mikrogels gemäss Beispiel (C) mit 536 g der Polyurethandispersion (D) (Feststoffgehalt = 28%), 646 g deionisiertem Wasser, 96 g Butoxyethanol und 33 g eines niedrig alkylierten Melaminharzes vermischt und mit 10%-iger Dimethylethanolamin-Lösung auf einen pH-Wert von 8,2 eingestellt. Zu dieser Bindemittelmischung werden unter Rühren 81,2 g einer Silberbronzenaufschlämmung (Feststoffgehalt = 65 % in Butoxyethanol) zugegeben und intensiv vermischt. Nach Zugabe von 58 g deionisiertem Wasser wird die Viskosität mit einem handelsüblichen Acrylatverdicker und Dimethylethanolamin auf 100 mPa·s eingestellt (Scherrate 1.000 s$^{-1}$ gemessen mit einem Rotationsviskosimeter Rheotec RC 20, Messsystem CC 45).
Die Festkörperkonzentration beträgt 20 %, bei einem pH-Wert von 8,3.

**Vergleichsbeispiel:**

Es wird ein Basislack entsprechend Anwendungsbeispiel 4 der WO 00/63265 hergestellt.

**Prüfung der Haftung unter Pulver:**

Die nach den zuvor beschriebenen Anwendungs- und Vergleichsbeispielen hergestellten wäßrigen Basislacke werden jeweils auf ein mit einem handelsüblichen Elektrotauchlack (Enviro Prime der Fa. PPG) und einem handelsüblichen Füller lackiertes Stahlblech mit einer Größe von 10 x 20 cm so gespritzt, dass ein Lackfilm mit einer Trockenfilmdicke von 12 - 15 $\mu$m erhalten wird. Der applizierte Naßfilm wird nach einer Vortrockenzeit von 5 min bei 60 °C mit einem handelsüblichen Pulverklarlack (PCC 10106 der Fa. PPG, Trockenschichtdicke 65 $\mu$m) lackiert und nach einer Vortrocknung von 10 Minuten bei 60 °C anschließend 30 Minuten bei 140 °C eingebrannt.
Die fertige Mehrschichtlackierung wird entsprechend der EN/ISO-Vorschrift 2409 (mittels Gitterschnitt) untersucht. Die Ergebnisse dieser Untersuchungen sind in der folgenden Tabelle angegeben. Hierbei bedeuten "Gt 0" sehr gut und "Gt 5" völlig unbrauchbar. Der von der Automobilindustrie akzeptierte Grenzwert liegt bei Gt 1.

**Prüfung der Laufsicherheit:**

Die nach den zuvor beschriebenen Anwendungs- und Vergleichsbeispielen hergestellten wäßrigen Basislacke werden mittels eines Spritzautomaten mit Druckluftzerstäubung auf eine senkrecht stehende Lochtafel mit einer keilförmig aufgebauten Trockenschichtdicke von 10 - 35 $\mu$m appliziert. Nach 3 Minuten Ablüften werden die Bleche senkrecht stehend 5 Minuten bei 80 °C vorgetrocknet und anschließend 10 Minuten bei 130 °C eingebrannt. Es wird die Schichtdicke des Basislackes angegeben, bei der die ersten Läufer beobachtet werden.

**Beurteilung der Wolkenbildung:**

Die nach den zuvor beschriebenen Anwendungs- und Vergleichsbeispielen hergestellten wäßrigen Basislacke werden jeweils auf ein mit einem handelsüblichen Elektrotauchlack (Enviro Prime der Fa. PPG) und einem handelsüblichen Füller lackiertes Stahlblech mit einer Größe von 30 x 50 cm so gespritzt, daß ein Lackfilm mit einer Trockenfilmdicke von 12 - 15 $\mu$m erhalten wird.
Der entsprechende Wasserbasislack wurde in zwei Spritzgängen appliziert. Der erste Auftrag erfolgte mittels ESTA (Glockendrehzahl 45.000 Umdrehungen pro Minute; Ausflußmenge 150 ml/min.), entsprechend einer Trockenfilmdicke von 7 bis 9 $\mu$m. Der zweite Auftrag erfolgte pneumatisch (Zerstäuberluftdruck: 5 bar), entsprechend einer Trockenfilmdicke von 4 bis 6 $\mu$m. Zwischen den beiden Aufträgen wurde 2 Minuten abgelüftet. Anschließend wurde die Basislackschicht 10 Minuten bei 80 °C vorgetrocknet und mit mit einem handelsüblichen Pulverklarlack (PCC 10106 der Fa. PPG, Trockenschichtdicke 65 $\mu$m) lackiert und anschließend 30 Minuten bei 140 °C eingebrannt.
Die Prüftafeln wurden unter diffusem Licht aus einem Abstand von zwei bis drei Metern in Aufsicht und in Schrägsicht hinsichtlich des Vorhandenseins von Wolken visuell beurteilt.
In der nachfolgenden Tabelle 1 sind die Ergebnisse der einzelnen Tests aufgeführt.

EP 1 389 627 B1

Tabelle 1

| Lackbeispiele | Viskosität (bei 1.000 s$^{-1}$) | Wolkenbildung | Haftung unter Pulver | Läufergrenze |
|---|---|---|---|---|
| Beispiel 1 | 100 mPa·s | Nein | Gt 0 | 31 $\mu$m |
| Vergleichsbeispiel | 103 mPa·s | Ja | Gt 0 | 27 $\mu$m |

Die Tabelle l zeigt deutlich, daß durch den Einsatz der erfindungsgemäßen Polymere Lackierungen erhalten werden, die sich durch eine sehr gute Haftung unter Klarlacken auf Basis von Pulver auszeichnen.
Ferner zeigen die erfindungsgemäßen Beispiele eine sehr gute Aluminiumorientierung, Wolkenfreiheit sowie einen ausgezeichneten Decklackstand.

**Patentansprüche**

1. In wässriger Phase dispergierte Polymermikroteilchen, erhältlich durch

   (a) Dispergieren in wässriger Phase einer zur Bildung eines Polyurethans fähigen Vorstufe aus mindestens einer Komponente, wobei die Vorstufe

   • mit Methylethylketoxim blockierte Isocyanatgruppen auf Basis von 1,3-Bis(1-isocyanato-1-methylethyl) benzol (TMXDI);
   • ein gewichtsmittleres Molekulargewicht von 2.000 bis 150.000;
   • eine Säurezahl zwischen 10 und 50;
   • einer OH-Zahl zwischen 25 und 250; und
   • im statistischen Mittel ein Verhältnis von blockierten Isocyanatgruppen zu Hydroxylgruppen von weniger als I

   aufweist;
   (b) Vernetzen der aus Schritt (a) erhältlichen Vorstufe in wässriger Phase in Gegenwart eines Katalysators unter Atmosphärendruck bei einer Temperatur von weniger als 100 °C, wobei die aus der Vorstufe stammenden Hydroxylgruppen mit den mit Methylethylketoxim blockierten Isocyanatgruppen in wässriger Phase unter Abspaltung von Methylethylketoxim unter Bildung von Urethanbindungen reagieren.

2. In wässriger Phase dispergierte Polymermikroteilchen nach Anspruch 1, **dadurch gekennzeichnet, dass** die Vorstufe aus mindestens zwei Komponenten besteht, wobei

   • die erste Komponente (I) ein im statistischen Mittel pro Molekül mindestens zwei mit Methylethylketoxim blockierte, von 1,3-Bis(1-isocyanato-1-methylethyl)benzol (TMXDI) stammende NCO-Gruppen aufweisendes Polyurethanpräpolymer mit einem Molekulargewicht zwischen 418 und 5.000 und einer Säurezahl zwischen 0 und 100 mg KOH/g ist;
   • die zweite Komponente (II) ein Polyol mit einer OH-Zahl zwischen 25 und 500 mg KOH/g, einer Säurezahl zwischen 0 und 100 und einem gewichtsmittleren Molekulargewicht zwischen 500 und 5.000 ist; und
   • die Vorstufe eine Säurezahl zwischen 10 und 50 mg KOH/g aufweist.

3. In wässriger Phase dispergierte Polymermikroteilchen nach Anspruch 2, **dadurch gekennzeichnet, dass** die Komponente (II) ein carboxylgruppenhaltiges Polyol ist, insbesondere ein Polyesterpolyol mit einem zahlenmittleren Molekulargewicht zwischen 700 und 5.000, besonders bevorzugt zwischen 750 und 2.000; einer Säurezahl zwischen 25 und 100 mg KOH/g, besonders bevorzugt zwischen 40 und 80 mg KOH/g; und einer OH-Zahl zwischen 34 und 300 mg KOH/g.

4. In wässriger Phase dispergierte Polymermikroteilchen nach Anspruch 3, **dadurch gekennzeichnet, dass** das Polyesterpolyol durch mindestens eine Monocarbonsäure modifiziert ist, ausgewählt aus der Gruppe der gesättigten oder ungesättigten, isolierten oder konjugierten, linearen oder verzweigten Fettsäuren sowie der Benzoesäure oder Crotonsäure.

5. In wässriger Phase dispergierte Polymermikroteilchen nach Anspruch 4, **dadurch gekennzeichnet, dass** die Fett-

8

säure 5 bis 22 Kohlenstoffatome aufweist und insbesondere Linolsäure, Ölsäure, Sojafettsäure, Isononansäure oder Isostearinsäure ist.

6. In wässriger Phase dispergierte Polymermikroteilchen nach einem der vorhergehenden Ansprüche, **dadurch gekennzeichnet, dass** die Polydispersität der Vorstufe mindestens 3 beträgt.

7. In wässriger Phase dispergierte Polymermikroteilchen nach einem der vorhergehenden Ansprüche, **dadurch gekennzeichnet, dass** der Katalysator Dibutylzinndilaurat (DBTL) ist.

8. Verfahren zur Herstellung von in wässriger Phase dispergierten Polymermikroteilchen, **dadurch gekennzeichnet, dass**

a) 1,3-Bis(1-isocyanato-1-methylethyl)benzol (TMXDI) mit Methylethylketoxim in der Weise umgesetzt wird, dass das Umsetzungsprodukt einen NCO-Gehalt von mindestens 13 % aufweist;
b) danach diese Reaktionsmischung mit einem Polyol mit mindestens drei OH-Gruppen und einer Verbindung, die mindestens eine zur Anionenbildung befähigte Gruppe und mindestens eine OH-Gruppe aufweist, so lange umgesetzt wird, bis der NCO-Gehalt der Reaktionsmischung weniger als 0,1% beträgt;
c) anschließend der Reaktionsmischung Wasser und soviel Neutralisationsmittel zugegeben wird, so dass eine stabile Dispersion erhalten wird;
d) die Reaktionsmischung solange bei einer Temperatur zwischen 30 und 100 °C gerührt wird, bis der Anteil an vernetzten Teilchen mehr als 60 % beträgt, bezogen auf den Gehalt an allen nichtflüchtigen Bestandteilen der Reaktionsmischung.

9. Verwendung von in wäßriger Phase dispergierter Polymermikroteilchen nach einem der vorhergehenden Ansprüche für wäßrige oder lösemittelhaltige Beschichtungszusammensetzungen.

10. Verwendung nach Anspruch 9 für wäßrige oder lösemittelhaltige Basislacke, Effektbasislacke oder Klarlacke in der Automobilindustrie.

11. Verwendung nach Anspruch 9 oder 10 für wäßrige oder lösemittelhaltige Pigmentzubereitungen.


**Claims**

1. Polymer microparticles dispersed in an aqueous phase, obtainable by

(a) dispersing a precursor, capable of forming a polyurethane and comprising at least one component, in an aqueous phase, the precursor having

- methyl ethyl ketoxime blocked isocyanate groups based on 1,3-bis(1-isocyanato-1-methylethyl) benzene (TMXDI);
- a weight average molecular weight of from 2,000 to 150,000;
- an acid number of between 10 and 50;
- an OH number of between 25 and 250; and
- a ratio of blocked isocyanate groups to hydroxyl groups of less than 1 on statistical average;

(b) crosslinking the precursor obtainable from step (a) in an aqueous phase in the presence of a catalyst under atmospheric pressure at a temperature of less than 100°C, wherein the hydroxyl groups of the precursor react with the methyl ethyl ketoxime blocked isocyanate groups in the aqueous phase under elimination of methyl ethyl ketoxime and formation of urethane linkages.

2. The polymer microparticles dispersed in an aqueous phase according to claim 1, **characterized in that** the precursor consists of at least two components,

- the first component (I) being a polyurethane prepolymer having, on statistical average, at least two methyl ethyl ketoxime blocked NCO groups derived from 1,3-bis(1-isocyanato-1-methylethyl) benzene (TMXDI) per molecule, a molecular weight of between 418 and 5,000, and an acid number of between 0 and 100 mg KOH/g;
- the second component (II) being a polyol having an OH number of between 25 and 500 mg KOH/g, an acid number of between 0 and 100, and a weight average molecular weight of between 500 and 5,000; and
- the precursor having an acid number of between 10 and 50 mg KOH/g.

3. The polymer microparticles dispersed in an aqueous phase according to claim 2, **characterized in that** the component (II) is a carboxyl group-containing polyol, especially a polyester polyol having a number average molecular weight of between 700 and 5,000, especially preferred between 750 and 2,000; an acid number of between 25 and 100 mg KOH/g, especially preferred between 40 and 80 mg KOH/g; and an OH number of between 34 and 300 mg KOH/g.

4. The polymer microparticles dispersed in an aqueous phase according to claim 3, **characterized in that** the polyester polyol is modified by at least one monocarboxylic acid, selected from the group of saturated or unsaturated, isolated or conjugated, linear or branched fatty acids, and benzoic acid or crotonic acid.

5. The polymer microparticles dispersed in an aqueous phase according to claim 4, **characterized in that** the fatty acid comprises from 5 to 22 carbon atoms, and is especially linoleic acid, oleic acid, soybean oil fatty acid, isononanoic acid or isostearic acid.

6. The polymer microparticles dispersed in an aqueous phase according to any one of the preceding claims, **characterized in that** the polydispersity of the precursor is at least 3.

7. The polymer microparticles dispersed in an aqueous phase according to any one of the preceding claims, **characterized in that** the catalyst is dibutyl tin dilaurate (DBTL).

8. A method for preparing polymer microparticles dispersed in an aqueous phase, **characterized by**

(a) reacting 1,3-bis(1-isocyanato-1-methylethyl) benzene (TMXDI) with methyl ethyl ketoxime so that the reaction product has an NCO content of at least 13%;
(b) thereafter, reacting said reaction mixture with a polyol having at least three OH groups and a compound having at least one group capable of forming anions and at least one OH group, until the NCO content of the reaction mixture is less than 0.1 %;
(c) thereafter, adding water and sufficient neutralizing agent to the reaction mixture to yield a stable dispersion;
(d) stirring the reaction mixture at a temperature of between 30 and 100°C for a period until the proportion of crosslinked particles is more than 60%, based on the content of all nonvolatile components of the reaction mixture.

9. Use of polymer microparticles dispersed in an aqueous phase according to any one of the preceding claims for aqueous or solvent-containing coating compositions.

10. Use according to claim 9 for aqueous or solvent-containing base coats, effect base coats, or clear coats in the automobile industry.

11. Use according to claim 9 or 10 for aqueous or solvent-containing pigment formulations.

**Revendications**

1. Microparticules de polymère dispersées dans une phase aqueuse, et que l'on peut obtenir par :

(a) dispersion, dans une phase aqueuse, d'un précurseur capable de former un polyuréthanne et constitué d'au moins un composant, où le précurseur présente

• des groupes isocyanate bloqués par une méthyléthylcétoxime, à base de 1,3-bis(1-isocyanato-1-méthyléthyl)benzène (TMXDI),
• une moyenne pondérale de poids moléculaire de 2000 à 150000,
• un indice d'acidité de 10 à 50,
• un indice OH de 25 à 250, et
• en moyenne statistique, une proportion de groupes isocyanates bloqués aux groupes hydroxyle inférieure à 1,

(b) réticulation du précurseur que l'on peut obtenir à l'étape (a) dans une phase aqueuse en présence d'un catalyseur et à la pression atmosphérique, à une température d'au moins 100°C, les groupes hydroxyle provenant du précurseur réagissant avec les groupes isocyanates bloqués par la méthyléthylcétoxime, dans la phase aqueuse, avec libération de méthyléthylcétoxime et formation de liaisons uréthanne.

2. Microparticules de polymère dispersées dans une phase aqueuse selon la revendication 1, **caractérisées en ce que** le précurseur est constitué d'au moins deux composants, où

• le premier composant (I) est un prépolymère de polyuréthanne présentant en moyenne statistique, par molécule, au moins deux groupes NCO provenant du 1,3-bis(1-isocyanato-1-méthyléthyl)benzène (TMXDI) et bloqués par de la méthyléthylcétoxime, d'un poids moléculaire de 418 à 5000 et d'un indice d'acidité de 0 à 100 mg de KOH/g,
• le deuxième composant (II) est un polyol d'un indice OH de 25 à 500 mg de KOH/g, d'un indice d'acidité de 0 à 100 et d'une moyenne pondérale de poids moléculaire de 500 à 5000, et
• le précurseur présente un indice d'acidité de 10 à 50 mg de KOH/g.

3. Microparticules de polymère dispersées dans une phase aqueuse selon la revendication 2, **caractérisées en ce que** le composant (II) est un polyol contenant des groupes carboxyle, en particulier un polyester polyol d'une moyenne numérique de poids moléculaire de 700 à 5000, plus préférentiellement de 750 à 2000, d'un indice d'acidité de 25 à 100 mg de KOH/g, plus préférentiellement de 40 à 80 mg de KOH/g, et d'un indice OH de 34 à 300 mg de KOH/g.

4. Microparticules de polymère dispersées dans une phase aqueuse selon la revendication 3, **caractérisées en ce que** le polyester polyol est modifié par au moins un acide monocarboxylique choisi dans le groupe formé par les acides gras insaturés, isolés ou conjugués, linéaires ou ramifiés, ainsi que l'acide benzoïque et l'acide crotonique.

5. Microparticules de polymère dispersées dans une phase aqueuse selon la revendication 4, **caractérisées en ce que** l'acide gras présente de 5 à 22 atomes de carbone et est en particulier de l'acide linoléique, de l'acide oléique, de l'acide gras de soja, de l'acide isononanoïque ou de l'acide isostéarique.

6. Microparticules de polymère dispersées dans une phase aqueuse selon l'une quelconque des revendications qui précèdent, **caractérisées en ce que** la polydispersivité du précurseur est d'au moins 3.

7. Microparticules de polymère dispersées dans une phase aqueuse selon l'une quelconque des revendications qui précèdent, **caractérisées en ce que** le catalyseur est du dilaurate de dibutylétain (DBTL).

8. Procédé de préparation de microparticules de polymère dispersées dans une phase aqueuse, **caractérisées en ce que**

a) on fait réagir du 1,3-bis(1-isocyanato-1-méthyléthyl)benzène (TMXDI) avec la méthyléthylcétoxime de manière que le produit de réaction présente une teneur en NCO d'au moins 13%,
b) on fait ensuite réagir ce mélange réactionnel avec un polyol comportant au moins trois groupes OH et un composé présentant au moins un groupe capable de former des anions et au moins un groupe OH, jusqu'à ce que la teneur en NCO du mélange réactionnel soit inférieure à 0,1%,
c) on ajoute ensuite au mélange réactionnel de l'eau et un agent de neutralisation en une quantité permettant l'obtention d'une dispersion stable,
d) on agite le mélange réactionnel, à une température de 30 à 100°C, jusqu'à ce que la fraction de particules réticulées soit supérieure à 60%, par rapport à la teneur en tous les constituants non volatils du mélange réactionnel.

9. Utilisation de microparticules de polymère dispersées dans une phase aqueuse selon l'une quelconque des revendications qui précèdent pour des compositions de revêtement aqueuses ou contenant du solvant.

10. Utilisation selon la revendication 9 pour des laques de base, des laques de base à effet ou des laques transparentes, aqueuses ou contenant du solvant, dans l'industrie automobile.

11. Utilisation selon la revendication 9 ou 10 pour des préparations pigmentaires aqueuses ou contenant du solvant.